(19) Europäisches Patentamt
European Patent Office
Office européen des brevets

(11) **EP 1 341 023 B1**

(12) **EUROPÄISCHE PATENTSCHRIFT**

(45) Veröffentlichungstag und Bekanntmachung des Hinweises auf die Patenterteilung:
**16.08.2006 Patentblatt 2006/33**

(51) Int Cl.:
**G02B 21/00** (2006.01)

(21) Anmeldenummer: **03100351.0**

(22) Anmeldetag: **17.02.2003**

(54) **Verfahren zum Benutzertraining für ein Scanmikroskop, Scanmikroskop und Software zum Benutzertraining für ein Scanmikroskop**

Method for training a user of a scanning microscope, scanning microscope, and software for said training

Méthode et software d'apprentissage pour microscope de balayage et microscope de balayage

(84) Benannte Vertragsstaaten:
**CH DE FR GB LI**

(30) Priorität: **20.02.2002 DE 10206979**

(43) Veröffentlichungstag der Anmeldung:
**03.09.2003 Patentblatt 2003/36**

(73) Patentinhaber: **Leica Microsystems CMS GmbH 35578 Wetzlar (DE)**

(72) Erfinder: **Olschewski, Frank 69118, Heidelberg (DE)**

(74) Vertreter: **Reichert, Werner Franz Leica Microsystems AG, Corporate Patents + Trademarks Department, Ernst-Leitz-Strasse 17-37 35578 Wetzlar (DE)**

(56) Entgegenhaltungen:
**WO-A-01/54052** **DE-A- 10 057 948**
**US-B1- 6 300 639**

**Beschreibung**

Die Erfindung betrifft ein Verfahren zum Benutzertraining für ein Scanmikroskop.

Ferner betrifft die Erfindung ein Scanmikroskop mit Mitteln zum Aufnehmen eines kompletten spektralen Scans eines Objekts, wobei das Mittel zum Aufnehmen mit spektralen Selektionsmitteln versehen ist, und einem Rechnersystem mit einem Speicher zum Ablegen des kompletten spektralen Scans in dem Speicher des Rechnersystems.

Ebenso betrifft die Erfindung eine Software zum Benutzertraining für ein Scanmikroskop.

Mikroskope, insbesondere Scanmikroskope, verbrauchen zu Trainingszwecken Proben, die durch die Strahlenbelastung (wie z.B. Bleichen, thermische Zerstörung, etc.) für weitere Untersuchungen nicht mehr brauchbar sind. Die optimale Einstellung (Parametereinstellung) eines Scanmikroskops ist für einen ungeübten Benutzer oft langwierig. Durch eine Wahl der falschen Parameter kann schnell eine Probe zerstört oder unbrauchbar werden. Da es einen hohen Zeit- und auch Geldaufwand erfordert die Proben für die mikroskopische Untersuchung herzustellen, ist der Nachteil der bisherigen Systeme, dass ebenfalls beim Benutzertraining Proben verbraucht werden ohne damit Versuchergebnisse bzw. Daten zu erhalten. Die Parameter umfassen z.B. die Intensität der einzelnen auf die Probe eingestrahlten Laserlinien, und auch die für die Auswertung und Bilderzeugung heranzuziehenden Bereiche eines aufgenommenen Spektrums. Hinzu kommt, dass im Falle der Verwendung eines Akustooptischen Beam Splitters (AOBS) ebenfalls zur Wellenlängenauswahl entsprechende Parameter des AOBS eingestellt werden müssen.

Die deutsche Patentanmeldung DE 199 44 355.6 offenbart eine optische Anordnung im Strahlengang eines Laser-Scanning-Mikroskops. Es ist ein spektral selektives Element vorgesehen, welches Anregungslicht der Lichtquelle von mindestens einer Wellenlänge in das Mikroskop einkoppelt. Das an einem Objekt gestreute und reflektierte Anregungslicht aus dem Detektionsstrahlengang wird ausgeblendet und das vom Objekt kommende Detektionslicht nicht. Das spektral selektive Element kann ein AOTF (Acousto-Optical-Tunable-Filter), ein AOM (Acousto-Optical-Modulator) oder ein AOBS (Acousto-Optical-Beam Splitter) ein.

Die deutsche Patentanmeldung DE 100 06 800.6 offenbart eine Vorrichtung zur Selektion und Detektion mindestens eines Spektralbereichs eines spektral aufgefächerten Lichtstrahls (SP-Modul). Im aufgefächerten Lichtstrahl sind Selektionsmittel vorgesehen, die als Schieber ausgebildet sind, um somit Teile des aufgefächerten Lichtstrahls auf verschiedene Detektoren zu lenken. Die Signale der Detektoren werden dann zu Bilderzeugung verwendet. Die Qualität des Bildes hängt dabei besonders von der Lage der Schieber ab. Für einen unerfahrenen Benutzer ist es zeitaufwendig die beste Lage zu finden und einzustellen.

Die deutsche Patentanmeldung DE 100 57 948 A1 offenbart ein Verfahren und eine Vorrichtung zur Benutzerführung in der Rastermikroskopie. Es werden die Hauptqualitätsparameter online visualisiert, so dass ein Benutzer das Mikroskop interaktiv einstellen kann. Mittels einer Anzeigeeinheit werden dem Benutzer die Ermittelten Bildparameter angezeigt und er kann ausgewählte Parameter verändern, um die Büdaufnahme bzw. Datenaufnahme zu verbessern

In keiner der zitierten Schriften ist ein Trainingskonzept offenbart, das schnell, und auch ohne auf das Mikroskop an sich angewiesen zu sein, einen Benutzer hinsichtlich der Einstellung der verschiedenen Parameter schult.

Der Erfindung liegt die Aufgabe zugrunde ein Verfahren zu schaffen, mit dem ein Benutzer die Einstellungen eines Scanmikroskops erlernen kann ohne dabei Probe und Ressourcen zu verbrauchen.

Die objektive Aufgabe wird durch ein Verfahren gelöst, das die Merkmale des kennzeichnenden Teils des Patentanspruchs 1 aufweist.

Eine weitere Aufgabe der Erfindung ist es, eine Scanmikroskop zu schaffen, mit dem eine Verbesserung der Trainings und Schulungsmöglichkeiten eines spektralen konfokalen Mikroskops inklusive einer Kostenersparnis erzielbar ist.

Die Aufgabe wird gelöst durch die kennzeichnenden Merkmale des Anspruchs 10.

Ferner liegt der Erfindung die Aufgabe zugrunde eine Software zu schaffen mit der es möglich ist das Benutzertraining für ein Scanmikroskop mit einem virtuellen Scanmikroskop (d.h. nein rein softwarebasiertes Lernen der Einstellungen) durchzuführen.

Die Aufgabe wird gelöst durch die kennzeichnenden Merkmale des Anspruchs 16.

Die Erfindung hat den Vorteil, dass man nach einmaliger Strahlenbelastung einer Probe mit der Charakteristik der Probe herumspielen und lernen kann ohne weitere Zerstörung anzurichten. Auch eine Demo Variante hierzu ist möglich, die den Datensatz von der einem Speicher (Festplatte, RAM, CD-ROM) liest. Dies minimiert die Trainingszeit an einem konfokalen Scanmikroskop erheblich und schont dabei kostbare Proben.

Bei unbekannten Proben, wie z.B. Proben die eine erhebliche Autofluoreszenz zeigen, oder bei Mutanten (gentechnisch manipuliert und mit einem fluoreszierenden Label versehen), kann man auch mit dem Lambda Scan beginnen um sich experimentell an die besten Bedingungen für das weitere Vorgehen bei Experimenten heranzutasten. Dies hat einen hohen Kundennutzen. Nach optimaler Interaktiver Einstellung auf der Basis der Spektralaufnahme können die Werte direkt in das SP Modul geladen werden, um mit diesem Datensatz optimal schöne Bilder zu machen.

Die Arbeitsweise eines SP Moduls ist mathematisch/simulatorisch relativ exakt an die Arbeitsweise des realen SP-Moduls angepasst. Durch Simulation können die Arbeitsweisen in die Softwareebene übertragen werden. Dort werden Sie aber automatisch zu einer Art inversen Filtern oder ähnlichem (hängt ein bisschen von der mathematischen Nomenklatur ab). Der wahre Wert des Softwaremoduls kommt ins Spiel, wenn der AOBS im Aufbau des Scanmikroskops mitintegriert ist

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:

Fig. 1     eine schematische Darstellung eines Scanmikroskops;

Fig. 2     eine schematische Darstellung eines Scanmikroskops, wobei dem Detektor ein SP Modul vorgeschaltet ist;

Fig. 3     eine schematische Darstellung des Mikroskops im Zusammenspiel mit der Software und dem Simulator;

Fig. 4a    eine schematische Darstellung eines Teils des Userinterfaces, über das der Benutzer des Einstellungen für das Scanmikroskop vornehmen kann;

Fig. 4b    eine schematische Darstellung eines anderen Teils des Userinterfaces, auf dem dem Benutzer die Resultate seiner Einstellungen in visueller Form wiedergegeben werden; und

Fig. 5     eine graphische Darstellung eines kompletten Spektrums, wobei eine Zuordnung der für die Berechnung notwendigen Vektoren dargestellt ist.

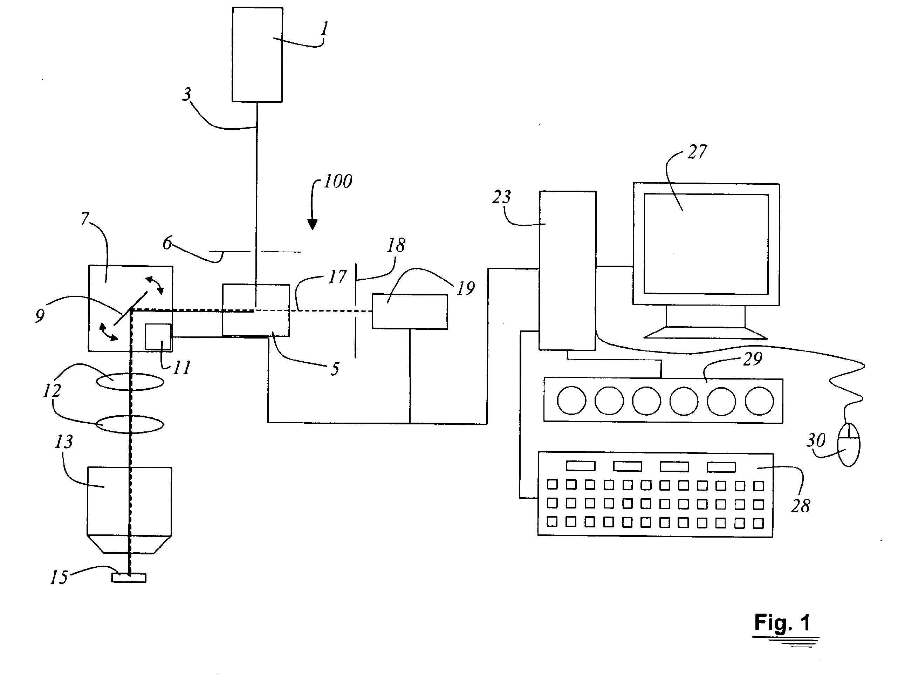

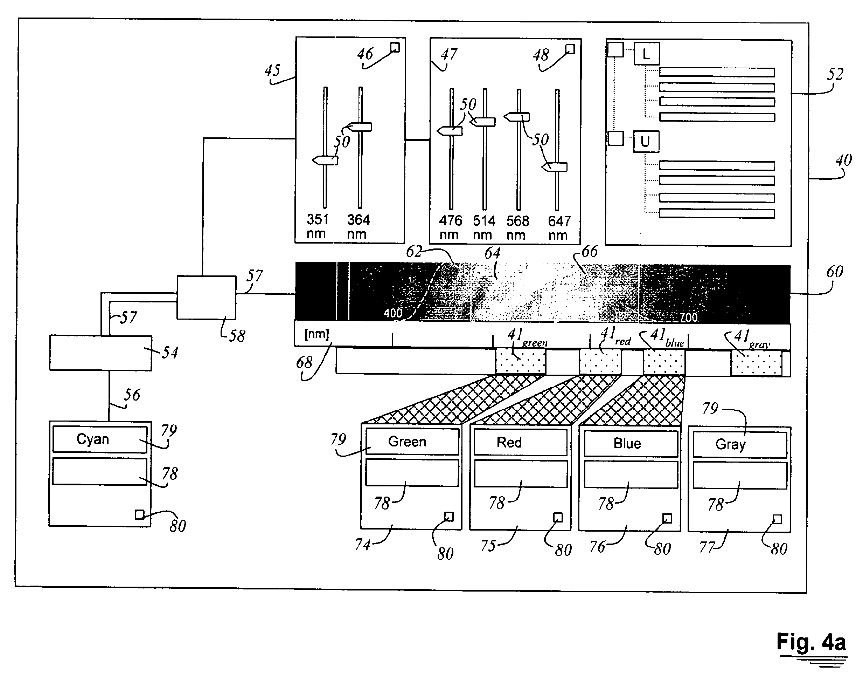

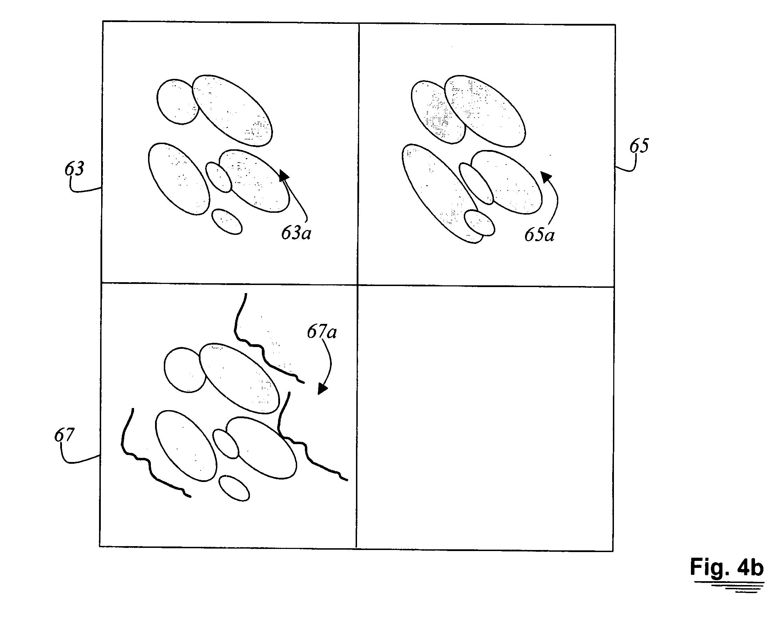

In Fig. 1 ist das Ausführungsbeispiel eines konfokalen Scanmikroskops 100 schematisch gezeigt. Dies soll jedoch nicht als Beschränkung der Erfindung aufgefasst werden. Es ist dem Fachmann hinlänglich klar, dass die Erfindung auch mit einem konventionellen Scanmikroskop realisiert werden kann. Der von mindestens einem Beleuchtungssystem 1 kommende Beleuchtungslichtstrahl 3 wird von einem Strahlteiler oder einem geeigneten Umlenkmittel 5 zu einem Scanmodul 7 geleitet. Bevor der Beleuchtungslichtstrahl 3 auf das Umlenkmittel 5 trifft, passiert dieser ein Beleuchtungspinhole 6. Das Scanmodul 7 umfasst einen kardanisch aufgehängten Scanspiegel 9, der den Beleuchtungslichtstrahl 3 durch eine Scanoptik 12 und eine Mikroskopoptik 13 hindurch über bzw. durch ein Objekt 15 führt. Der Beleuchtungslichtstrahl 3 wird bei nicht transparenten Objekten 15 über die Objektoberfläche geführt. Bei biologischen Objekten 15 (Präparaten) oder transparenten Objekten kann der Beleuchtungslichtstrahl 3 auch durch das Objekt 15 geführt werden. Zu diesen Zwecken werden nichtleuchtende Präparate ggf. mit einem geeigneten Farbstoff präpariert (nicht dargestellt, da etablierter Stand der Technik). Dies bedeutet, dass verschiedene Fokusebenen des Objekts nacheinander durch den Beleuchtungslichtstrahl 3 abgetastet werden. Mit den Scanmodul 7 ist ein Positionssensor 11 verbunden, der die Positionsdaten der aufgenommenen Bilddaten bestimmt. Die nachträgliche Zusammensetzung Positionsdaten und der Bilddaten ergibt dann einen zwei- oder dreidimensionalen Frame (bzw. Bild) des Objekts 15. Der vom Beleuchtungssystem 1 kommende Beleuchtungslichtstrahl 3 ist als durchgezogene Linie dargestellt. Das vom Objekt 15 ausgehende Licht definiert einen Detektionslichtstrahl 17. Dieser gelangt durch die Mikroskopoptik 13, die Scanoptik 12 und über das Scanmodul 7 zum Umlenkmittel 5, passiert dieses und gelangt über ein Detektionspinhole 18 auf mindestens einen Detektor 19, der als Photomultiplier ausgeführt ist. Es ist dem Fachmann klar, dass auch andere Detektionskomponenten, wie z.B. Dioden, Diodenarrays, Photomultiplierarrays, CCD Chips oder CMOS Bildsensoren eingesetzt werden können. Der vom Objekt 15 ausgehende bzw. definierte Detektionslichtstrahl 17 ist in Fig. 1 als gestrichelte Linie dargestellt. Im Detektor 19 werden elektrische, zur Leistung des vom Objekt 15 ausgehenden Lichtes, proportionale Detektionssignale erzeugt. Da vom Objekt 15 Licht nicht nur einer Wellenlänge ausgesandt wird, ist es sinnvoll vor dem mindestens einen Detektor 19 ein Selektionsmittel 21 für das von der Probe ausgehende Spektrum einzufügen. Die vom Detektor 19 erzeugten Daten werden an ein Rechnersystem 23 weitergegeben. Dem Rechnersystem 23 ist mindestens ein Peripheriegerät 27 zugeordnet. Das Peripheriegerät kann z.B. ein Display sein, auf dem der Benutzer Hinweise zur Einstellung des Scanmikroskops erhält oder den aktuellen Setup und auch die Bilddaten in graphischer Form entnehmen kann. Auf dem Display ist z.B. auch ein User-Interface dargestellt, wie es z.B. in Fig. 4 gezeigt ist. Ferner ist mit dem Rechnersystem 23 ein Eingabemittel zugeordnet, das z.B. aus einer Tastatur 28, einer Einstellvorrichtung 29 für die Komponenten des Mikroskopsystems und einer Maus 30 besteht.

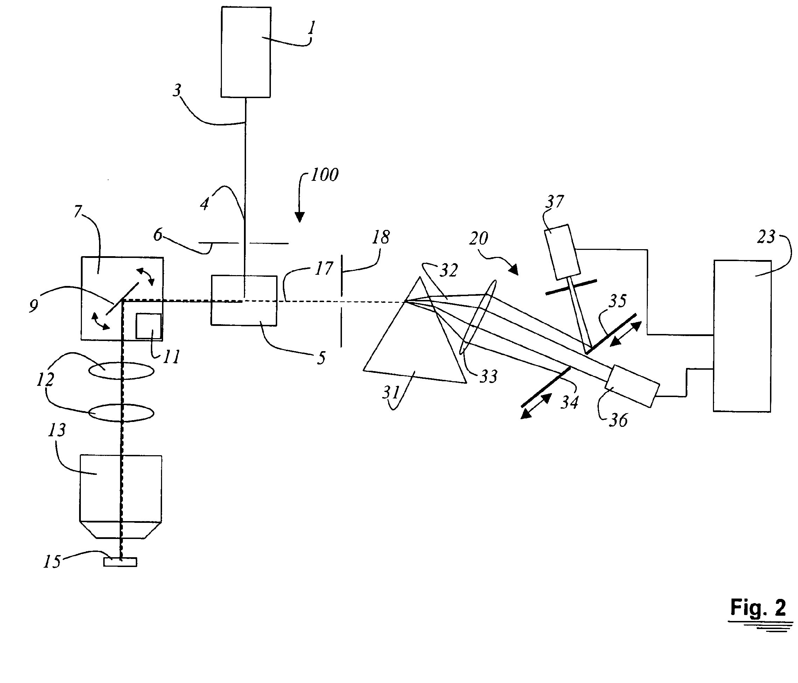

Fig. 2 zeigt die Ausführungsform eines Scanmikroskops, bei dem vor dem mindestens einen Detektor 19 als Selektionsmittel ein SP Modul 20 angeordnet ist. Alle anderen in Fig. 2 gezeigten Elemente stimmen mit denen aus Fig. 1 überein, so dass sie bei der Beschreibung zu Fig. 2 nicht noch einmal erwähnt werden müssen. Das SP Modul 20 (Fig. 2) nimmt einen kompletten Lambda Scan auf, d.h., dass für jeden Objektpunkt alle vom Objekt 15 ausgehenden Wellenlängen aufgezeichnet werden. Die Daten werden an das Rechnersystem 23 übertragen und können dann in einer von Benutzer bestimmbaren Weise auf dem Display 27 dargestellt werden. Das Detektionslichtstrahl 17 wird mit einem Prisma 31 räumlich spektral aufgespalten. Eine weitere Möglichkeit der spektralen Aufspaltung ist die Verwendung eines Reflexions-, oder Transmissionsgitters. Der spektral aufgespaltene Lichtfächer 32 wird mit der Fokussieroptik 33 fokussiert und trifft anschließend auf eine Spiegelblendenanordnung 34, 35. Die Spiegelblendenanordnung 34, 35, die Mittel zur spektralen, räumlichen Aufspaltung (Prisma 31), die Fokussieroptik 33 und die Detektoren 36 und 37 werden zusammen als SP-Modul 20 (oder Mutibanddetektor) bezeichnet. Wie aus Fig. 4 ersichtlich ist, kann mittel der Spiegelblendenanordnung 34, 35 eine gewünschter Teil des Spektrums ausgewählt werden. Dazu werden auf dem User-Interface vom Benutzer Schieber verfahren, die im SP-Modul 20 eine der Auswahl entsprechende Verstellung der Spiegelblendenanordnung 34, 35 bewirken. Ein Teil des aufgespaltenen Lichtfächers 32 des Detektionslichtstrahls 17, der nur Licht des vorgewählten Spektralbereichs umfasst, passiert die Spiegelblendenanordnung 34, 35 und wird von dem Detektor 36, der als Photomultiplier ausgeführt ist detektiert. Ein anderer Teil des aufgespaltenen Lichtfächers 32 wird an der Spiegelblendenanordnung 35 reflektiert und gelangt zu Detektor 37, der ebenfalls als Photomultiplier ausgeführt ist. Die Spiegelblendenanordnungen 34, 35 sind, in den durch die Doppelpfeile illustrierten Richtungen verschiebbar, so dass die spektralen Detektionsbereiche des den Detektoren 36, 37, zugeführten Lichtes kontinuierlich einstellbar sind. Es ist möglich, jedoch der Übersichtlichkeit halber nicht dargestellt, noch weitere Detektoren einzubauen und weiteren Spiegelblenden zuzuordnen. In den Detektoren 36, 37 werden elektrische, zur Leistung des vom Objekt 15 ausgehenden Detektionslichtstrahls 17 des jeweiligen Spektralbereichs proportionale Detektionssignale erzeugt, die in dem Rechnersystem 23 den in der Strahlablenkeinrichtung mit Hilfe eines Positionssensors erfassten Positionssignalen zugeordnet werden.

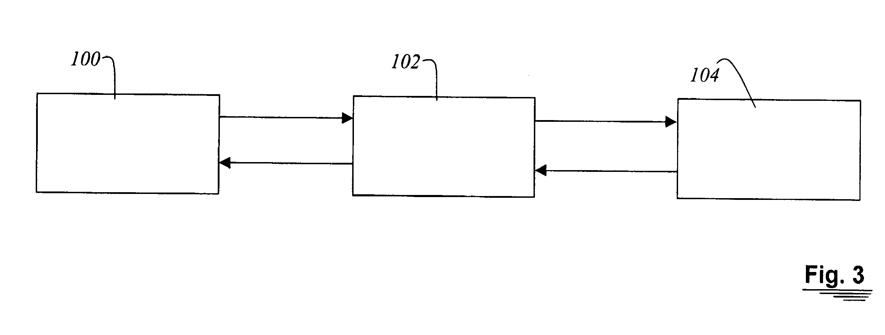

In Fig. 3 ist das der prinzipielle Aufbau zum Benutzertraining für ein Scanmikroskop 100 wiedergegeben. Dieses Benutzertraining erlaubt es, dass ein Benutzer die Einstellvorgänge eines Scanmikroskops 100 lernt, ohne dass hierzu ein Objekt 15 während der gesamten Lernphase benötigt wird. Mit dem Scanmikroskop 100 ist ein Softwaremodul 102 verbunden, das interaktiv ausgebildet ist. In dem speziellen interaktiven Softwaremodul 102 wird die Arbeitsweise des SP Moduls 20 (Fig. 2) simuliert, das heißt, es werden spektrale Bänder aus dem Datensatz separiert, aufakkumuliert, zu Kanälen zusammengefasst, mehrfarbig dargestellt. Alle Möglichkeiten der Software eines konfokalen Scanmikroskops kommen damit in Betracht. Im Prinzip sieht die Software dann aus wie ein User Interface (siehe hierzu Fig.4). Mit den SP Modul 30 wird für jeden Pixel ein vollwertiger spektraler Intensitätsvektor $\vec{I}$ aufgenommen (siehe Gleichung 1), mit:

$$\vec{I} = \begin{pmatrix} I_1 \\ \vdots \\ I_n \end{pmatrix} , \quad I_i = \int\limits_{\lambda_{min}+i\Delta\lambda}^{\lambda_{min}+(i+1)\Delta\lambda} I(\lambda) \qquad \text{Gleichung 1}$$

Dies entspricht einem kompletten spektralen Scan mit dem SP Modul 30. Wobei die des Scans durch das Systemdesign oder die Parametereinstellung vorgegeben ist. Bei dem SP Modul 30 ist die Dimensionalität n frei verstellbar. Die vom Scanmikroskop 100 gelieferten Daten bzw. ein mit dem Scanmikroskop erfasster Scan wird im RAM des Rechnersystem 23 gehalten. Das Rechnersystem 23 schaltet in einen Simulationsmode des SP Moduls 30. Dazu ist mit dem Softwaremodul 102 ein Simulator 104 verbunden, der dem Benutzer ein exaktes User Interface mit den Standardkomponenten der SP Modul Bediensoftware zeigt.

In Fig. 4a ist ein Teil einer schematischen Ausführungsform eines User Interfaces 40 dargestellt mit dem der Benutzer eine Anzahl gewünschter Kanäle definieren kann. Hierzu sind auf dem User Interface 40 Selektionsschieber $41_{green}$, $41_{red}$, $41_{blue}$ oder $41_{gray}$ dargestellt, mit denen der Benutzer die verschiedenen spektralen Bänder tunen kann. Bei einem realen System verstellt der Benutzer ein spektrales Band und als Folge davon werden im SP Modul 30 die Spiegelschieber 34 und 35 bewegt. Das Resultat ist, dass optisch das spektrale Band separiert und angezeigt wird. Die Simulation wird dadurch erreicht, dass das Rechnersystem 23 diese optische Separation simuliert, indem für jeden gewünschten Kanal ein Vektor $\vec{I}_{Kanal}$ mit der Dimensionalität des oben genannten Vektors $\vec{I}$ erzeugt wird, indem die Werte für $I_i$ welche im ausgewählten Band liegen auf eins gesetzt werden. Das Rechnersystem 23 berechnet für jeden gewünschten Kanal pixelweise ein Bild durch die Linearkombination (siehe Gleichung 2).

$$I_{Kanal} = \frac{1}{\left\| \vec{I}_{Kanal} \right\|} \left\langle \vec{I}, \vec{I}_{Kanal} \right\rangle \qquad \text{(Gleichung 2)}$$

Die berechneten Daten der Kanäle werden dem Benutzer auf dem Display 27 angezeigt, wobei in die Darstellung alle möglichen Darstellungsmodi (Overlay, Volume Rendering etc.) mit einbezogen werden können. Um die Darstellung auf dem Display 27 zu erzielen ist wie in Fig. 3 gezeigt der Simulator 104 mit dem Rechnersystem 23 verbunden. Der Benutzer kann, ohne das Objekt 15 zu belasten (durch Strahlung, thermisch, etc.), entsprechend lange weiter machen bis er mit dem am Display 27 dargestellten Bild zufrieden ist. Auf Knopfdruck wird die Einstellung gespeichert und als Filtermakro bzw. Einstellmakro des SP Moduls 30 für weitere Arbeiten mit dem selben Objekt 15 oder ähnlichen Objekten zur Verfügung gestellt. In dem in Fig. 4a dargestellten Teil des User Interfaces 40 ist das Scanmikroskop ebenfalls schematisch abgebildet, und dem Benutzer wird eine Vielzahl von Einstellmöglichkeiten zur Verfügung gestellt. In der beschriebenen Ausführungsform ist ein erster Laser 45 und ein zweiter Laser 47 vorgesehen, die beide schematisch als Box dargestellt sind. Der erste Laser 45 ist z.B. ein Argon UV Laser (ArUV Laser) der Licht einer ersten Wellenlänge von 351 nm und Licht einer zweiten Wellenlänge von 364nm emittiert. Der zweite Laser 45 ist z.B. ein Argon Krypton Laser (ArKr Laser) der Licht einer ersten Wellenlänge von 476nm, Licht einer zweiten Wellenlänge von 514nm, Licht einer dritten Wellenlänge von 568nm und Licht einer vierten Wellenlänge von 647nm emittiert. In jeder Box ist für jede der verfügbaren Wellenlängen ein Schieberegler 50 vorgesehen, über die der prozentuale Anteil der Laserleistung der jeweiligen Wellenlänge einstellbar ist. Ebenso ist in jeder Box eine Anzeige 46, 48 vorgesehen, die auf den Betriebszustand des jeweiligen Lasers hinweist, bzw. über die der Laser ein- oder ausschaltbar ist. Neben der Box für den zweiten Laser 47 ist eine Datenstruktur 52 dargestellt, wie die Daten auf dem Speicher des Rechnersystems 23 abgelegt sind. Schematisch ist auf dem Display ebenfalls die Probe 54 und ein von den Lasern 45, 47 kommender Lichtstrahl 55, ein von der Probe 54 transmittierter Lichtstrahl 56 und ein von der Probe 54 reflektierter Lichtstrahl 57 dargestellt. Die Lichtstrahlen werden durch eine schematisch dargestellte Strahlumlenkeinrichtung 58 entsprechend gelenkt. Der von der Probe 54 kommende Lichtstrahl 57 weist auf eine Darstellung eines Spektrums 60. In dem Spektrum 60 sind die vom ersten und zweiten Laser 45, 47 emittierten Linien eingetragen. Ebenso ist die Intensität und die spektrale Lage des von der Probe 54 reflektierten Lichts 57 in dem Spektrum 60 dargestellt. In dem hier dargestellten Ausführungsbeispiel sind im Spektrum 60 eine erste Intensitätskurve 62, eine zweite Intensitätskurve 64 und eine dritte Intensitätskurve 66 dargestellt. Unterhalb des Spektrums 60 ist eine Skala 68 vorgesehen, die als eine Orientierungshilfe für die darunter angeordneten Selektionsschieber $41_{green}$, $41_{red}$, $41_{blue}$ oder $41_{gray}$ dient. Die Selektionsschieber $41_{green}$, $41_{red}$, $41_{blue}$ oder $41_{gray}$ werden mit der Maus oder einem ähnlichen Mittel auf dem User Interface 40 bewegt. Unterhalb der Selektionsschieber $41_{green}$, $41_{red}$, $41_{blue}$ oder $41_{gray}$ ist ein erster Detektor 74, ein zweiter Detektor 75, ein dritter Detektor 76 und ein vierter Detektor 77 ebenfalls schematisch als Box dargestellt. In jeder Box ist eine Anzeige 78 vorgesehen. Die Anzeige 78 ist als Drop Down Anzeige ausgestaltet, so dass der Benutzer auf einfache Weise einen anderen Farbstoff wählen kann. Ferner ist jeder Box eine Farbangabe 79 zugeordnet, die angibt wie die Signale des jeweiligen Detektors zur Bilderzeugung auf dem Display verwendet werden (siehe hierzu Fig. 4b). Der Betriebszustand eines jeden Detektors ist in jeder Box über ein aktivierbares Kästchen 80 angezeigt. Dem von der Probe 54 transmittiertem Licht ist ein fünfter Detektor 82 zugeordnet, der ebenfalls die Anzeige 78 für den durch den Detektor 82 detektierten Farbstoff, die Box für die Farbangabe 79 und das aktivierbare Kästchen 80 aufweist.

In Fig. 4b sind die Bilder einer realen Probe oder eine virtuellen Probe dargestellt, wie sie sich ergeben, wenn der Benutzer auf dem User-Interface 40 die Selektionsschieber $41_{green}$, $41_{red}$, $41_{blue}$ oder $41_{gray}$ verändert und dadurch andere Bereiche des Spektrums für die Bilderzeugung auswählt. In dem hier dargestellten Ausführungsbeispiel wird die vom ersten Detektor 74 aufgenommene Intensität zur Erzeugung eines Grünbildes 63 verwendet. Die vom zweiten Detektor 75 aufgenommene Intensität wird zur Erzeugung eines Rotbildes 65 verwendet. Die vom dritten Detektor 76 aufgenommene Intensität wird zur Erzeugung eines Blaubildes 67 verwendet. Es ist selbstverständlich, dass sich die Bilder dahingehend unterscheiden, dass in den jeweils ausgewählten Spektralbereichen andere oder zusätzliche Strukturen 63a, 65a und 67a sichtbar werden.

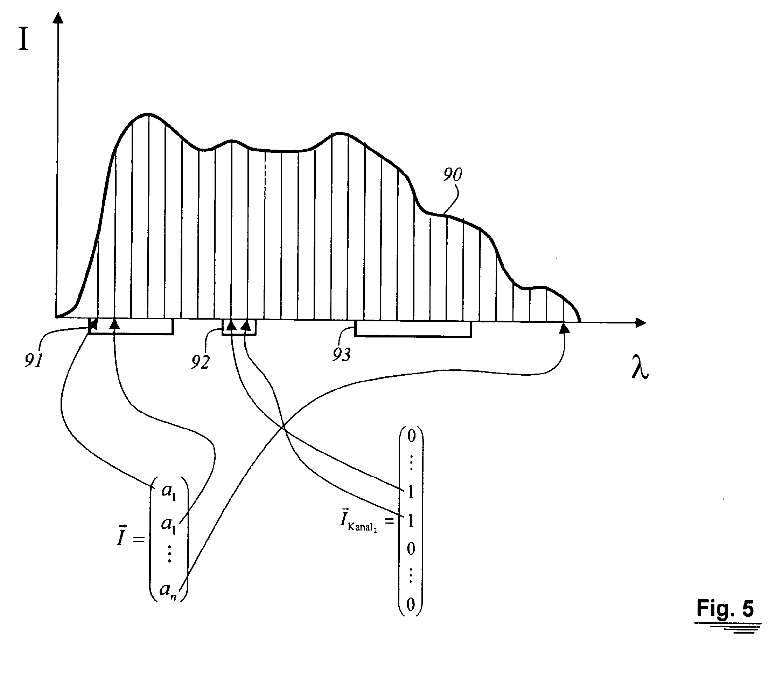

In Fig. 5 ist die Intensität I in Abhängigkeit von der Wellenlänge λ aufgetragen. Das in Fig. 5 dargestellte Spektrum 90 kann z.B. mittels eines Lambda-Scans erzeugt werden oder aus einer Datenbank abgerufen werden, in der Spektren 90 zu Lernzwecken abgelegt sind. Das Spektrum 90 kann durch einen Vektor $\vec{I}$ mit den Einzelkomponenten $a_1$, $a_2$ bis $a_n$ (n -dimensional) dargestellt werden. Unterhalb der Abszisse sind die ausgewählten Bereiche des Spektrums durch ein erstes, zweites und drittes Rechteck 91, 92 und 93 gekennzeichnet. angezeigt wird. Die Simulation wird dadurch erreicht, dass das Rechnersystem 23 diese optische Separation simuliert, indem für den durch das zweite Rechteck 92 festgelegten Kanal bzw. Spektralbereich der Vektor $\vec{I}_{Kanal2}$ mit der Dimensionalität des oben genannten Vektors I erzeugt wird. Die Werte der $I_i$, welche innerhalb des zweiten Rechtecks 92 liegen werden auf eins gesetzt.

**Patentansprüche**

1. Verfahren zum Benutzertraining für ein Scanmikroskop (100), **gekennzeichnet durch** die folgenden Schritte:

a) Abrufen eines kompletten spektralen Scans aus einem Speicher des Rechnersystems (23);

b) Simulieren einer spektralen Selektion, wobei der Benutzer mehrere Kanäle aus den kompletten spektralen Scan festlegt,

c) Verstellen von spektralen Selektionsmitteln am realen System wobei das Rechnersystem (23) die optische Separation simuliert

d) Erzeugen und Darstellen eines Bildes für jeden **durch** den Benutzter festgelegten Kanal, und

e) Wiederholen der obigen Schritte c) bis e) bis die erzeugten Bilder den einer vom Benutzer bestimmten Informationsgehalts entsprechen.

2. Verfahren nach Anspruch 1, **dadurch gekennzeichnet, dass** die Schritte:

   a) Aufnehmen eines kompletten spektralen Scans eines Objekts (15), und

   b) Ablegen des kompletten spektralen Scans in einem Speicher des Rechnersystems (23) ausgeführt werden.

3. Verfahren nach Anspruch 1 oder 2, **dadurch gekennzeichnet, dass** das Simulieren an Hand eines SP Moduls (20) durchgeführt wird, wobei dem Benutzer auf einem dem Rechnersystem (23) zugeordneten Display (27) ein exaktes User Interface (40) mit den Standard Komponenten der Bediensoftware für das SP-Modul (20) gezeigt wird.

4. Verfahren nach Anspruch 1, **dadurch gekennzeichnet, dass** beim Aufnehmen eines kompletten Scans für jedes Pixel ein vollwertiger spektraler Intensitätsvektor $\vec{I}$ aufgenommen wird, wobei

$$\vec{I} = \begin{pmatrix} I_1 \\ \vdots \\ I_n \end{pmatrix}, \quad I_i = \int\limits_{\lambda_{\min}+i\Delta\lambda}^{\lambda_{\min}+(i+1)\Delta\lambda} I(\lambda)$$

dem kompletten spektralen Scan mit dem SP Modul (20) entspricht und $\Delta\lambda$ beim SP Modul (20) frei verstellbar ist.

5. Verfahren nach Anspruch 1, **dadurch gekennzeichnet, dass** die im User Interface (40) dargestellten interaktiven Selektionsmittel als Spiegelschieber (34, 35) ausgebildet sind, mit denen optisch ein Band separiert und angezeigt wird.

6. Verfahren nach Anspruch 5, **dadurch gekennzeichnet, dass** vom Rechnersystem (23) eine optische Separation simuliert wird indem für jeden gewünschten Kanal ein Vektor $\vec{I}_{Kanal}$ mit der Dimensionalität des vollwertigen spektralen Intensitätsvektors $\vec{I}$ erzeugt wird, wobei die Komponenten $I_i$ des spektralen Intensitätsvektors $\vec{I}_{Kanal}$, welche im separierten Band liegen auf eins gesetzt werden.

7. Verfahren nach Anspruch 6, **dadurch gekennzeichnet, dass** das Rechnersystem (23) für jeden gewünschten Kanal pixelweise ein Bild durch die Linearkombination

$$I_{Kanal} = \frac{1}{\left\| \vec{I}_{Kanal} \right\|} \left\langle \vec{I}, \vec{I}_{Kanal} \right\rangle$$

berechnet.

8. Verfahren nach Anspruch 1, **dadurch gekennzeichnet, dass** zum Darstellen mehrere Darstellungsmodi einbezogen werden.

9. Verfahren nach Anspruch 1, **dadurch gekennzeichnet, dass** während der interaktiven Benutzertrainings die simulierten Einstellungen als Konfigurationsdatensatz in die Mikroskopsteuerung übernommen wird.

**10.** Scanmikroskop (100) mit Mitteln zum Aufnehmen eines kompletten spektralen Scans eines Objekts (15), wobei das Mittel zum Aufnehmen mit spektralen Selektionsmitteln versehen ist, einem Rechnersystem (23) mit einem Speicher zum Ablegen des kompletten spektralen Scans in dem Speicher des Rechnersystems (23), **dadurch gekennzeichnet, dass** ein Simulatormodul (104) vorgesehen ist, das dem Benutzer nach dessen Auswahl bestimmter Kanäle aus dem kompletten spektralen Scan eine spektrale Selektion auf einem dem Rechnersystem (23) zugeordnetem Display (27) wiedergibt.

**11.** Scanmikroskop (100) nach Anspruch 10, **dadurch gekennzeichnet, dass** das Simulatormodul (104) eine Simulationssoftware umfasset, die zusammen mit dem Benutzer aus den verschiedenen auf dem Display (27) dargestellten spektralen Selektionen eine optimale Einstellung der Selektionsmittel erzeugt.

**12.** Scanmikroskop nach Anspruch 10, **dadurch gekennzeichnet, dass** das Mittel zum Aufnehmen eines kompletten Scans als SP-Modul (20) ausgebildet ist und das die spektralen Selektionsmittel als Spiegelschieber (34, 35) ausgebildet sind mit denen optisch ein Band separierbar ist.

**13.** Scanmikroskop (100) nach Anspruch 10, **dadurch gekennzeichnet, dass** das Rechnersystem (23) für jeden gewünschten Kanal pixelweise ein Bild durch die Linearkombination

$$I_{Kanal} = \frac{1}{\left\| \vec{I}_{Kanal} \right\|} \left\langle \vec{I}, \vec{I}_{Kanal} \right\rangle$$

berechnet, wobei für jeden gewünschten Kanal ein Vektor $\vec{I}_{Kanal}$ mit der Dimensionalität des vollwertigen spektralen Intensitätsvektors $\vec{I}$ erzeugt wird, wobei die Komponenten $I_i$ des spektralen Intensitätsvektors $\vec{I}_{Kanal}$, welche im separierten Band liegen auf eins gesetzt sind.

**14.** Scanmikroskop (100) nach Anspruch 13, **dadurch gekennzeichnet, dass** zum Darstellen mehrere Darstellungsmodi zugänglich sind.

**15.** Scanmikroskop (100) nach Anspruch 10, **dadurch gekennzeichnet, dass** das Simulatormodul (104) ein User-Interface (40) umfasst, wobei das User-Interface (40) dem Benutzer das Bild des aufgenommenen Objekts in verschiedenen Darstellungsmodi zeigt und einstellbare Mittel des Scanmikroskopsystems (100) schematisch wiedergibt, wobei die einstellbaren Mittel durch Eingabemittel (28, 29, 30) des Rechnersystems (23) verstellbar sind.

**16.** Software auf einem Datenträger **dadurch gekennzeichnet, dass** die Software auf einem handelsüblichen Rechnersystem (23) ein Benutzertraining für ein Scanmikroskop (100) durchführt wobei das Benutzertraining **gekennzeichnet ist durch** die folgenden Schritte:

• Abrufen eines kompletten spektralen Scans aus einem Speicher des Rechnersystems (23);
• Simulieren einer spektralen Selektion, wobei der Benutzer mehrere Kanäle aus den kompletten spektralen Scan festlegt,
• Verstellen von spektralen Selektionsmitteln am realen System wobei das Rechnersystem (23) die optische Separation simuliert
• Erzeugen und Darstellen eines Bildes für jeden **durch** den Benutzter festgelegten Kanal, und
• Wiederholen der obigen Schritte c) bis e) bis die erzeugten Bilder den einer vom Benutzer bestimmten Informationsgehalts entsprechen.

**17.** Software nach Anspruch 16 **dadurch gekennzeichnet, dass** das Rechnersystem (23) als handelsüblicher PC, handelsüblicher Personal Digital Assistent, handelsübliches Telephon oder handelsübliche Multimedia Heimanlage (Hifi, Video), oder handelsüblicher Gameboy ausgeprägt ist.

**Claims**

1. User training method for a scanning microscope (100), **characterized by** the following steps:

   a) retrieving a complete spectral scan from a memory of the computer system (23),
   b) simulating a spectral selection, the user fixing a number of channels from the complete spectral scan,
   c) adjusting spectral selection means on the real system, the computer system (23) simulating the optical separation,
   d) generating and displaying an image for each channel fixed by the user, and
   e) repeating the above steps c) to e) until the generated images correspond to the information content determined by the user.

2. Method according to Claim 1, **characterized in that** the following steps are executed:

   a) taking a complete spectral scan of an object (15), and
   b) storing the complete spectral scan in a memory of the computer system (23).

3. Method according to Claim 1 or 2, **characterized in that** the simulation is carried out with the aid of an SP module (20), the user being shown on a display (27) assigned to the computer system (23) an exact user interface (40) with the standard components of the operating software for the SP module (20).

4. Method according to Claim 1, **characterized in that** a complete-value spectral intensity vector I is recorded for each pixel when taking a complete scan,

$$\bar{I} = \begin{pmatrix} I_1 \\ \vdots \\ I_n \end{pmatrix} \, , \; I_i = \int\limits_{\lambda_{min}+i\Delta\lambda}^{\lambda_{min}+(i+1)\Delta\lambda} I(\lambda)$$

corresponding to the complete spectral scan with the aid of the SP module (20), and $\Delta\lambda$, being freely adjustable in the SP module (20).

5. Method according to Claim 1, **characterized in that** the interactive selection means displayed in the user interface (40) is designed as mirror slides (34, 35) with the aid of which a band is separated and displayed optically.

6. Method according to Claim 5, **characterized in that** the computer system (23) simulates an optical separation by generating for each desired channel a vector $\vec{I}_{channel}$ with the dimensionality of the full-value spectral intensity vector I, the component $I_i$ of the spectral intensity vector $\vec{I}_{channel}$ which lie in the separated band being set to unity.

7. Method according to Claim 6, **characterized in that** for each desired channel the computer system (23) calculates an image in pixelwise fashion by means of the linear combination

$$I_{channel} \;=\; \frac{1}{\left\|\vec{I}_{channel}\right\|} \left\langle \vec{I}, \; \vec{I}_{channel} \right\rangle .$$

8. Method according to Claim 1, **characterized in that** a number of display modes are incorporated for the purpose of display.

9. Method according to Claim 1, **characterized in that** during the interactive user training the simulated settings are adopted into the microscope control as configuration data record.

10. Scanning microscope (100) having means for taking a complete spectral scan of an object (15), the taking means being provided with spectral selection means, a computer system (23) with a memory for storing the complete spectral scan in the memory of the computer system (23), **characterized in that** a simulator module (104) is provided which reproduces a spectral selection on a display (27) assigned to the computer system (23) to the user after he has selected specific channels from the complete spectral scan.

11. Scanning microscope (100) according to Claim 10, **characterized in that** the simulator module (104) comprises a simulation software which, together with the user, generates an optimum setting of the selection means from the various spectral selections represented on the display (27).

12. Scanning microscope according to Claim 10, **characterized in that** the means for taking a complete scan is designed as an SP module (20), and **in that** the spectral selection means are designed as mirror slides (34, 35) with the aid of which a band can be separated optically.

13. Scanning microscope (100) according to Claim 10, **characterized in that** the computer system (23) calculates an image in pixelwise fashion for each desired channel by means of the linear combination

$$I_{channel} \;=\; \frac{1}{\left\| \vec{I}_{channel} \right\|} \left\langle \vec{I}, \; \vec{I}_{channel} \right\rangle ,$$

a vector $\vec{I}_{channel}$ with the dimensionality of the full-value spectral intensity vector $\vec{I}$ being generated for each desired channel, the components $I_i$ of the spectral intensity vector $\vec{I}_{channel}$ which lie in the separated band being set to unity.

14. Scanning microscope (100) according to Claim 13, **characterized in that** a number of display modes are accessible for the purpose of display.

15. Scanning microscope (100) according to Claim 10, **characterized in that** the simulator module (104) comprises a user interface (40), the user interface (40) showing the user the image of the recorded object in various display modes and diagrammatically reproducing settable means of the scanning microscope system (100), the settable means being adjustable with the aid of input means (28, 29, 30) of the computer system (23).

16. Software on a data carrier **characterized in that** the software carries out user training for a scanning microscope (100) on a commercially available computer system (23), the user training being **characterized by** the following steps:

   • retrieving a complete spectral scan from a memory of the computer system (23),
   • simulating a spectral selection, the user fixing a number of channels from the complete spectral scan,
   • adjusting spectral selection means on the real system, the computer system (23) simulating the optical separation,
   • generating and displaying an image for each channel fixed by the user, and
   • repeating the above steps c) to e) until the generated images correspond to the information content determined by the user.

17. Software according to Claim 16, **characterized in that** the computer system (23) takes the form of a commercially available PC, a commercially available personal digital assistant, a commercially available telephone or a commercially available home multimedia system (hi-fi, video), or a commercially available GameBoy.

**Revendications**

1. Méthode de formation d'utilisateur pour un microscope à balayage (100), **caractérisée par** les étapes suivantes :

   a) extraire un balayage spectral complet d'une mémoire du système informatique (23) ;
   b) simuler une sélection spectrale, l'utilisateur définissant plusieurs canaux provenant du balayage spectral complet ;

c) ajuster des moyens de sélection spectrale sur le système réel, le système informatique (23) simulant la séparation optique ;

d) générer et représenter une image pour chaque canal défini par l'utilisateur ; et

e) répéter les étapes c) à e) ci-dessus jusqu'à ce que les images générées correspondent au contenu d'information déterminé par l'utilisateur.

2. Méthode selon la revendication 1, **caractérisée en ce que** les étapes suivantes .

a) enregistrer un balayage spectral complet d'un objet (15) ; et

b) stocker le balayage spectral complet dans une mémoire du système informatique (23).

3. Méthode selon la revendication 1 ou 2, **caractérisée en ce que** la simulation est exécutée à l'aide d'un module SP (20), dans laquelle une interface utilisateur exacte (40) avec les composants standard du logiciel d'utilisation pour le module SP (20) est affichée à destination de l'utilisateur sur un affichage (27) affecté au système informatique (23).

4. Méthode selon la revendication 1, **caractérisée en ce que** lors de l'enregistrement d'un balayage complet, un vecteur d'intensité spectral pleinement valable $\bar{I}$ est enregistré pour chaque pixel, dans laquelle

$$\bar{I} = \begin{pmatrix} I_1 \\ \vdots \\ I_n \end{pmatrix}, \quad I_i = \int_{\lambda_{min}+i\Delta\lambda}^{\lambda_{min}+(i+1)\Delta\lambda} I(\lambda)$$

correspond au balayage spectral complet par le module SP (20) et $\Delta\lambda$ est ajustable librement sur le module SP (20).

5. Méthode selon la revendication 1, **caractérisée en ce que** les moyens de sélection interactifs, représentés sur l'interface utilisateur (40), sont réalisés comme des glissières de miroir (34, 35) permettant de séparer et d'afficher une bande de façon optique.

6. Méthode selon la revendication 5, **caractérisée en ce que** le système informatique (23) simule une séparation optique **en ce que** pour chaque canal souhaité un vecteur $I_{Kanal}$ avec la dimensionnalité du vecteur d'intensité spectral pleinement valable I est généré, dans laquelle les composantes $I_i$ du vecteur d'intensité spectral $I_{Kanal}$ qui se trouvent dans la bande séparée sont réglées sur un.

7. Méthode selon la revendication 6, **caractérisée en ce que** le système informatique (23) calcule pour chaque canal souhaité pixel par pixel une image par l'intermédiaire de la combinaison linéaire

$$I_{Kanal} = \frac{1}{\left\|\bar{I}_{Kanal}\right\|} \left\langle \bar{I}, \bar{I}_{Kanal} \right\rangle$$

8. Méthode selon la revendication 1, **caractérisée en ce que** plusieurs modes de représentation sont impliqués dans la représentation.

9. Méthode selon la revendication 1, **caractérisée en ce que** pendant la formation d'utilisateur interactive, les réglages simulés sont repris comme un enregistrement de configuration dans la commande de microscope.

10. Microscope à balayage (100), comprenant des moyens pour enregistrer un balayage spectral complet d'un objet (15), dans lequel les moyens d'enregistrement sont munis de moyens de sélection spectrale, d'un système informatique (23) avec une mémoire pour le stockage du balayage spectral complet dans la mémoire du système informatique (23), **caractérisé en ce qu'**un module de simulateur (104) est prévu qui reproduit pour l'utilisateur d'après la sélection de celui-ci de certains canaux provenant du balayage spectral complet une sélection spectrale sur un affichage (27) affecté au système informatique (23).

**11.** Microscope à balayage (100) selon la revendication 10, **caractérisé en ce que** le module de simulateur (104) comprend un logiciel de simulation qui génère avec l'utilisateur un réglage optimal des moyens de sélection à partir des différentes sélections spectrales représentées sur l'affichage (27).

**12.** Microscope à balayage selon la revendication 10, **caractérisé en ce que** les moyens d'enregistrement d'un balayage complet sont réalisés comme un module SP (20) et que les moyens de sélection spectrale sont réalisés comme des glissières de miroir (34, 35) permettant de séparer une bande de façon optique.

**13.** Microscope à balayage (100) selon la revendication 10, **caractérisé en ce que** le système informatique (23) calcule pour chaque canal souhaité pixel par pixel une image par l'intermédiaire de la combinaison linéaire

$$I_{Kanal} = \frac{1}{\left\| \bar{I}_{Kanal} \right\|} \left\langle \bar{I}, \bar{I}_{Kanal} \right\rangle$$

dans lequel, pour chaque canal souhaité, un vecteur $\bar{I}_{Kanal}$ avec la dimensionnalité du vecteur d'intensité spectral pleinement valable I est généré, dans lequel les composantes $I_i$ du vecteur d'intensité spectral $\bar{I}_{Kanal}$ qui se trouvent dans la bande séparée sont réglées sur un.

**14.** Microscope à balayage (100) selon la revendication 13, **caractérisé en ce que** plusieurs modes de représentation sont accessibles pour la représentation.

**15.** Microscope à balayage (100) selon la revendication 10, **caractérisé en ce que** le module de simulateur (104) comprend une interface utilisateur (40), dans lequel l'interface utilisateur (40) affiche pour l'utilisateur l'image de l'objet enregistré dans différents modes de représentation et reproduit schématiquement des moyens réglables du système de microscope à balayage (100), dans lequel les moyens réglables peuvent être ajustés par des moyens d'entrée (28, 29, 30) du système informatique (23).

**16.** Logiciel sur un support de données, **caractérisé en ce que** le logiciel exécute sur un système informatique (23) usuel une formation d'utilisateur pour un microscope à balayage (100), dans lequel la formation d'utilisateur est **caractérisée par** les étapes suivantes :

• extraire un balayage spectral complet d'une mémoire du système informatique (23) ;
• simuler une sélection spectrale, l'utilisateur définissant plusieurs canaux provenant du balayage spectral complet ;
• ajuster des moyens de sélection spectrale sur le système réel, le système informatique (23) simulant la séparation optique ;
• générer et représenter une image pour chaque canal défini par l'utilisateur ; et
• répéter les étapes c) à e) ci-dessus jusqu'à ce que les images générées correspondent au contenu d'information déterminé par l'utilisateur.

**17.** Logiciel selon la revendication 16, **caractérisé en ce que** le système informatique (23) se présente sous la forme d'un PC usuel, d'un assistant numérique personnel usuel, d'un téléphone usuel ou d'un système domestique multimédia (hi-fi, vidéo) usuel ou d'une console Gameboy usuelle.

**Fig. 1**

EP 1 341 023 B1

EP 1 341 023 B1

**Fig. 2**

Fig. 3

Fig. 4a

Fig. 4b

Fig. 5

EP 1 341 023 B1